# EUROPEAN PATENT APPLICATION

(11) **EP 2 485 475 A1**
(43) Date of publication of application: **08.08.2012**
(21) Application number: 10820197.1
(22) Date of filing: 28.04.2010
(51) Int. Cl.: H04N 5/265, G09G 5/00, G09G 5/18, G09G 5/377

(54) **IMAGE OUTPUT DEVICE AND IMAGE SYNTHESIZING METHOD**

(30) Priority: 29.09.2009 JP 2009224091
(71) Applicant: Sharp Kabushiki Kaisha, Osaka-shi, Osaka 545-8522 (JP)
(72) Inventor: TANAKA, Yuhji, Osaka-chi, Osaka 545-8522 (JP)
(74) Representative: Goddar, Heinz J.
(86) International application number: PCT/JP2010/057590
(87) International publication number: WO 2011/040077

(57) **Abstract**

A signal synthesis section (10) synthesizes a first input image signal and a second input image signal such that frames of a first input effective signal and of a second input effective signal, overlap between the frames being long, are synthesized.

## Description

### Technical Field

The present invention relates to an image output device. In particular, the present invention relates to an image output device which is capable of suppressing tearing when synthesizing a plurality of input image signals to output a single image, even if for example frames of the input image signals are out of sync with each other.

### Background Art

In transmitting a high-resolution image signal, a single cable may not be sufficient to carry the image signal, because the image signal is large in data size. If this is the case, it is necessary to divide a single image signal into a plurality of signals and transmit these signals via a plurality of cables.

Further, in generating a high-resolution image signal, a single image processing device may not be sufficient to generate such an image signal because of not-so-high throughput of the image processing device. If this is the case, such an image signal may be divided into a plurality of signals, which are to be generated by a plurality of image processing devices and then transmitted via separate cables.

Patent Literature 1 discloses an image output device which (i) generates, from a plurality of input images, a single display image in which a display region is allocated for each of the plurality of input images and (ii) displays the single display image.

Patent Literature 1 further discloses the following method. That is, in a case where a frame frequency differs between the plurality of input images, for the purpose of preventing tearing that occurs when these images are concurrently outputted, (i) an input image serving as a reference is selected by a user or on the basis of an area ratio between these images and (ii) a frame frequency of the other of the plurality of input images is synchronized with a frame frequency of the input image serving as a reference. In other words, Patent Literature 1 discloses outputting, when displaying a plurality of input images having different frame frequencies, a display image which looks better to a user by causing one of the plurality of input images to serve as a main input image in accordance with a predetermined selection rule.

It should be noted that the tearing means a separation occurring in an image displayed on a screen, which separation looks like a line passing through a moving object in the image, for example.

### Citation List

### Patent Literatures

Patent Literature 1
   Japanese Patent Application Publication, Tokukai, No. 2007-271848 A (Publication Date: October 18, 2007)
Patent Literature 2
   Japanese Patent Application Publication, Tokukaihei, No. 7-154680 A (Publication Date: June 16, 1995)
Patent Literature 3
   Japanese Patent Application Publication, Tokukaihei, No. 7-75014 A (Publication Date: March 17, 1995)
Patent Literature 4
   Japanese Patent Application Publication, Tokukaihei, No. 5-176229 A (Publication Date: July 13, 1993)
Patent Literature 5
   Japanese Patent Application Publication, Tokukaihei, No. 5-103260 A (Publication Date: April 23, 1993)
Patent Literature 6
   Japanese Patent Application Publication, Tokukaihei, No. 2-166495 A (Publication Date: June 27, 1990)

### Summary of Invention

### Technical Problem

According to the technique disclosed in Patent Literature 1, it is possible to suppress tearing that occurs when for example a plurality of images having different frame frequencies are displayed concurrently on a single screen. However, the technique is not capable of suppressing tearing that occurs when a single image is divided and these divided images are again synthesized. That is, the technique is not capable of suppressing tearing that occurs when an image signal corresponding to a single image is divided into a plurality of image signals, the plurality of image signals are transmitted via for example a plurality of separate cables, and thereafter the plurality of image signals are again synthesized to be displayed as a single image.

The present invention has been made in view of such a conventional problem, and an object of the present invention is to provide an image output device and an image synthesizing method each of which is capable of suppressing tearing that occurs when a single image signal is divided into a plurality of image signals and thereafter these divided image signals are synthesized to be displayed as a single image.

### Solution to Problem

In order to attain the above object, an image output device in accordance with the present invention is an image output device including a signal synthesis section for synthesizing a plurality of input image signals to obtain a synthesized image signal, which image output device outputs a single image based on the synthesized image signal, in a case where one of the input image signals is referred to as a reference input image signal, the signal synthesis section synthesizing the reference input image signal and the other(s) of the input image signals such that frames of the reference input image signal and of the other(s) of the input image signals which is/are to be synthesized with the reference input image signal, overlap between frame periods of the frames being long, are synthesized.

In order to attain the above object, an image synthesizing method in accordance with the present invention is an image synthesizing method for synthesizing a plurality of input image signals to output a single image, said method including the steps of, in a case where one of the input image signals is referred to as a reference input image signal: specifying frames of the reference input image signal and of the other(s) of the input image signals which is/are to be synthesized with the reference input image signal, overlap between frame periods of the frames being long; and synthesizing the frames thus specified in the step of specifying.

According to the image output device or the image synthesizing method, the input image signals are synthesized such that frames of the input image signals, overlap between frame periods of the frames being long, are synthesized.

In an image output device to which a plurality of input image signals are to be inputted, the input image signals inputted may be out of phase with each other. Generally, this is due to a difference between the lengths of input cables connected with the image output device or a difference between timings at which the input image signals are outputted etc. Usually, in most cases, the input image signals are out of phase with each other by not more than 0.5 frames.

Under such circumstances, according to the configuration or the method, the input image signals are synthesized such that frames, overlap between frame periods of the frames being long, are synthesized. This reduces the likelihood that frames not corresponding to each other are synthesized, and thus reduces the likelihood that tearing occurs which is likely to occur when the frames not corresponding to each other are synthesized.

Therefore, according to the configuration or the method, it is possible to suppress tearing that occurs when a single image signal is divided into a plurality of image signals and thereafter these divided image signals are synthesized to be displayed as a single image.

### Advantageous Effects of Invention

An image output device in accordance with the present invention is configured such that, in a case where one of the input image signals is referred to as a reference input image signal, the signal synthesis section synthesizes the reference input image signal and the other(s) of the input image signals such that frames of the reference input image signal and of the other(s) of the input image signals which is/are to be synthesized with the reference input image signal, overlap between frame periods of the frames being long, are synthesized.

An image synthesizing method in accordance with the present invention includes the steps of, in a case where one of the input image signals is referred to as a reference input image signal: specifying frames of the reference input image signal and of the other(s) of the input image signals which is/are to be synthesized with the reference input image signal, overlap between frame periods of the frames being long; and synthesizing the frames thus specified in the step of specifying.

The image output device or the image synthesizing method makes it possible to suppress tearing that occurs when a single image signal is divided into a plurality of image signals and thereafter these divided image signals are synthesized to be displayed as a single image.

### Brief Description of Drawings

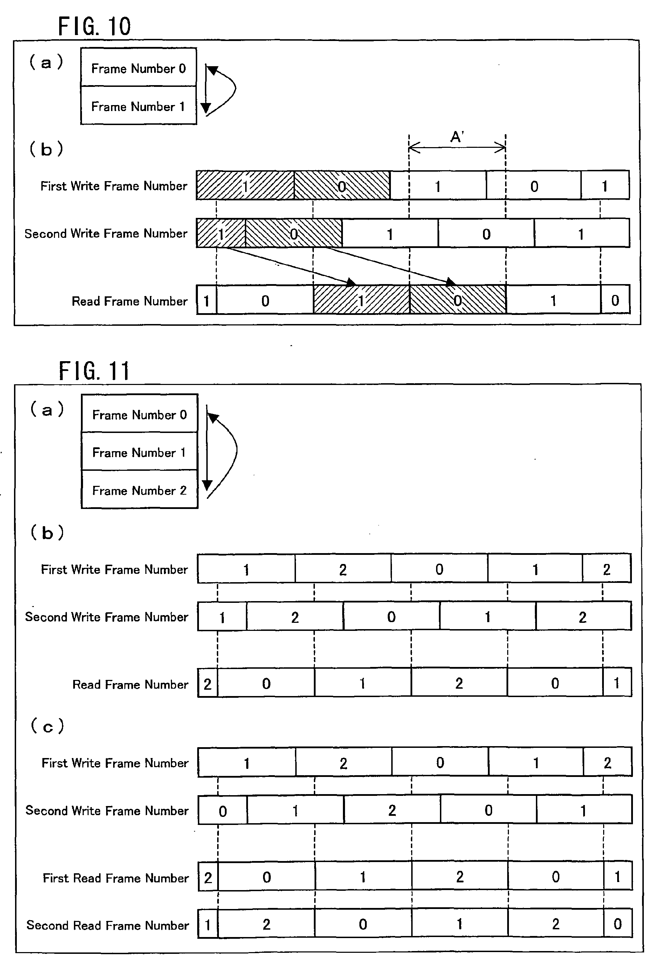

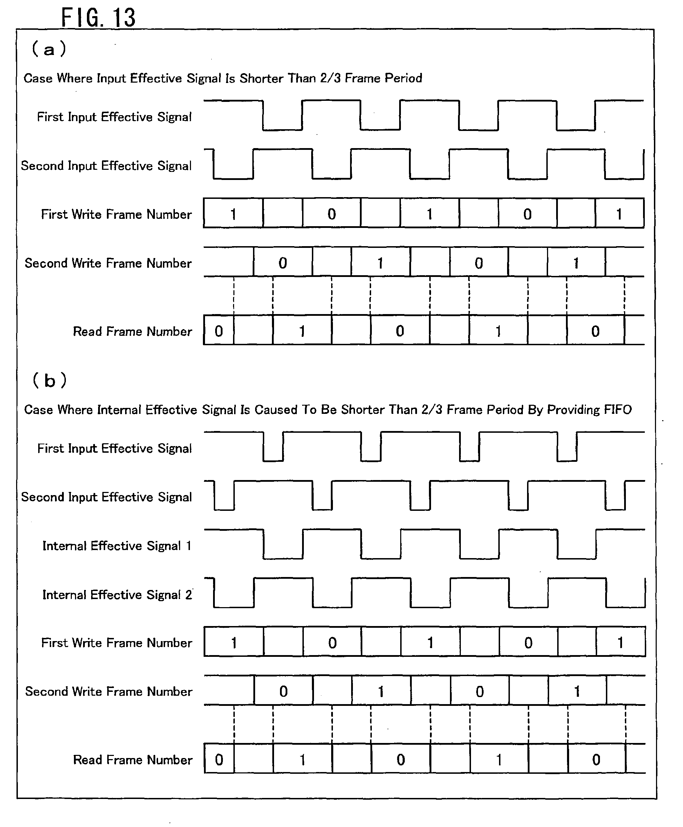

Fig. 1

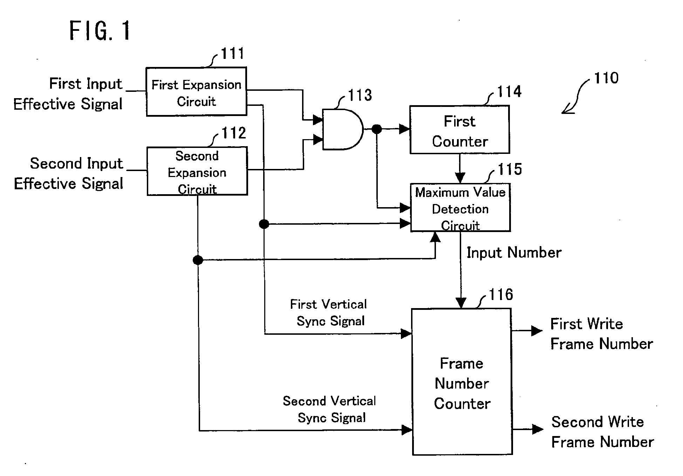

   Fig. 1 is a block diagram schematically illustrating a configuration of a write frame number generation section of an image output device in accordance with Embodiment 1 of the present invention.
Fig. 2

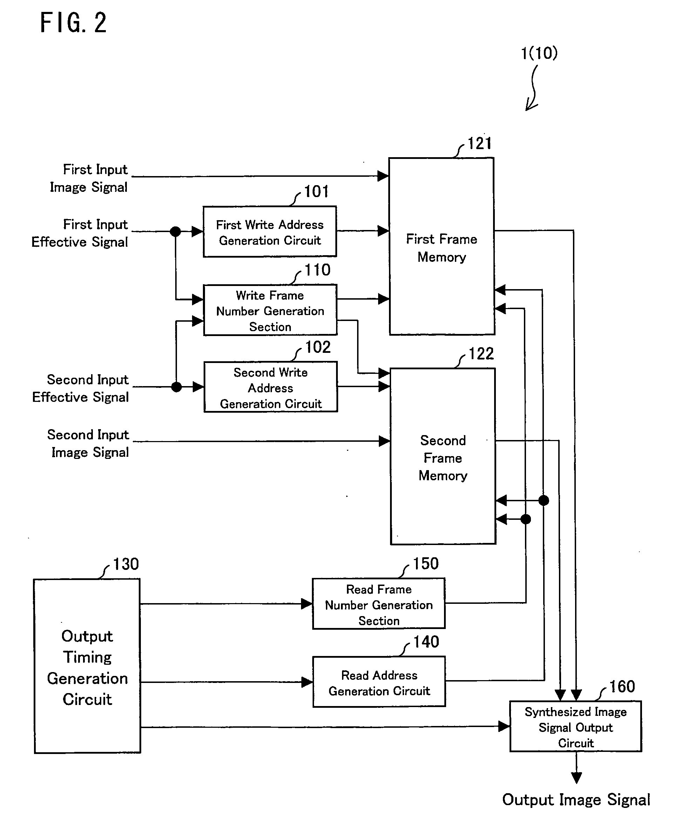

   Fig. 2 is a block diagram schematically illustrating a configuration of the image output device in accordance with Embodiment 1 of the present invention.
Fig. 3

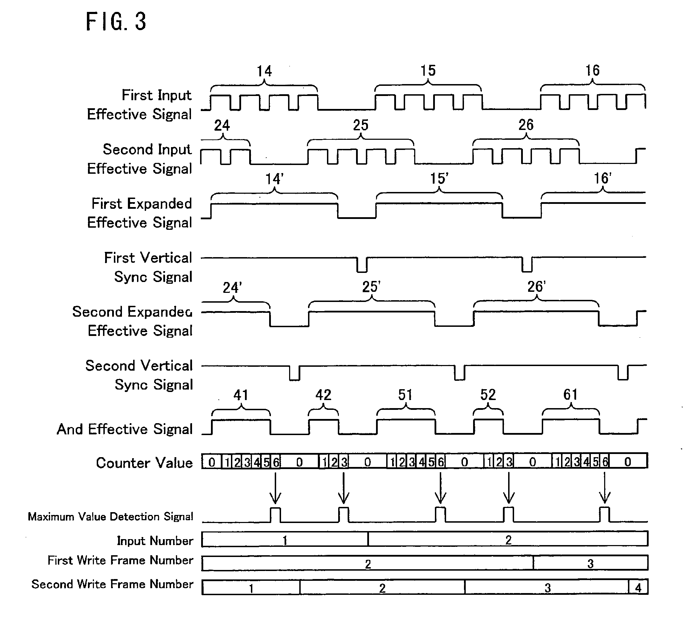

   Fig. 3 is a view describing an example in which write frame numbers are generated by the write frame number generation section shown in Fig. 1.
Fig. 4

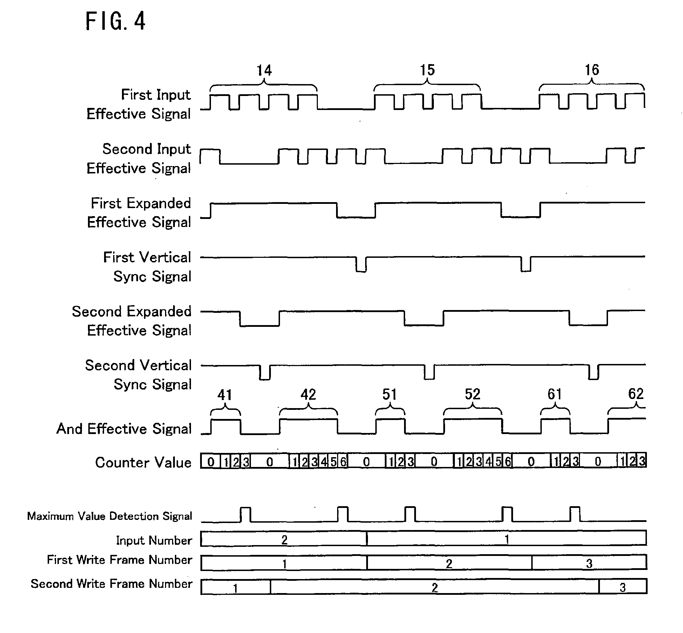

   Fig. 4 is a view describing another example in which write frame numbers are generated by the write frame number generation section shown in Fig. 1.
Fig. 5

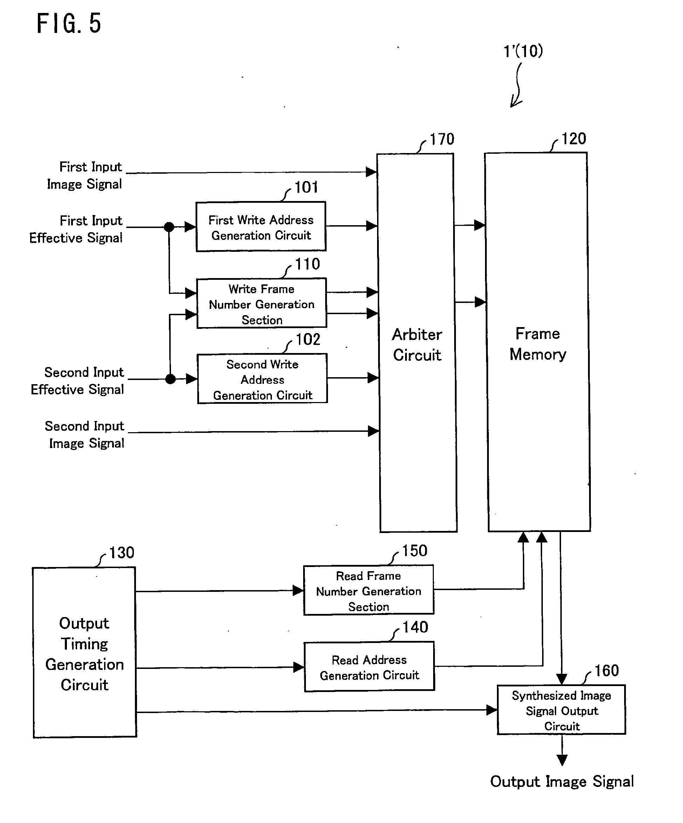

   Fig. 5 is a block diagram schematically illustrating a configuration of an image output device in accordance with Embodiment 2 of the present invention.
Fig. 6

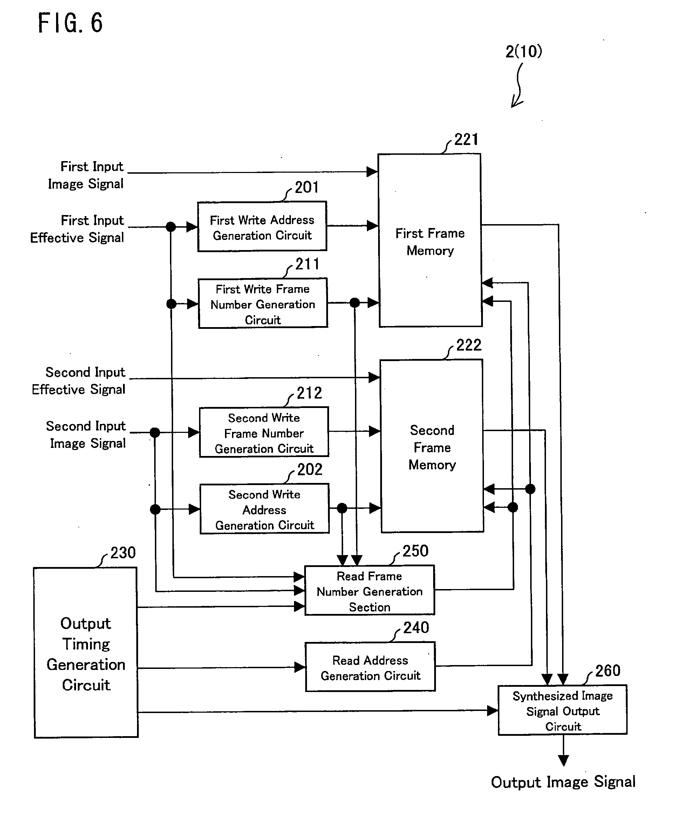

   Fig. 6 is a block diagram schematically illustrating a configuration of an image output device in accordance with Embodiment 3 of the present invention.
Fig. 7

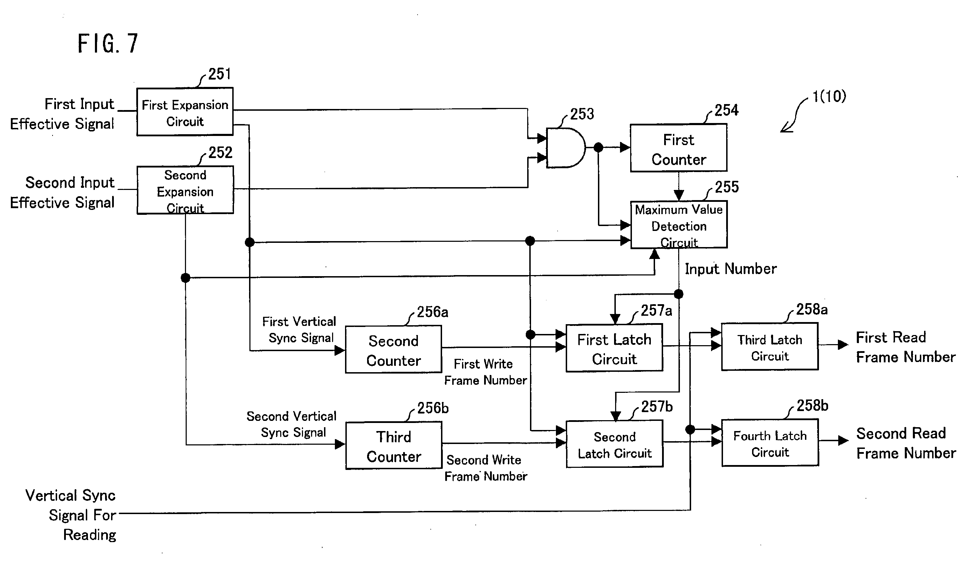

   Fig. 7 is a block diagram schematically illustrating a configuration of a read frame number generation section of the image output device in accordance with Embodiment 3 of the present invention.
Fig. 8

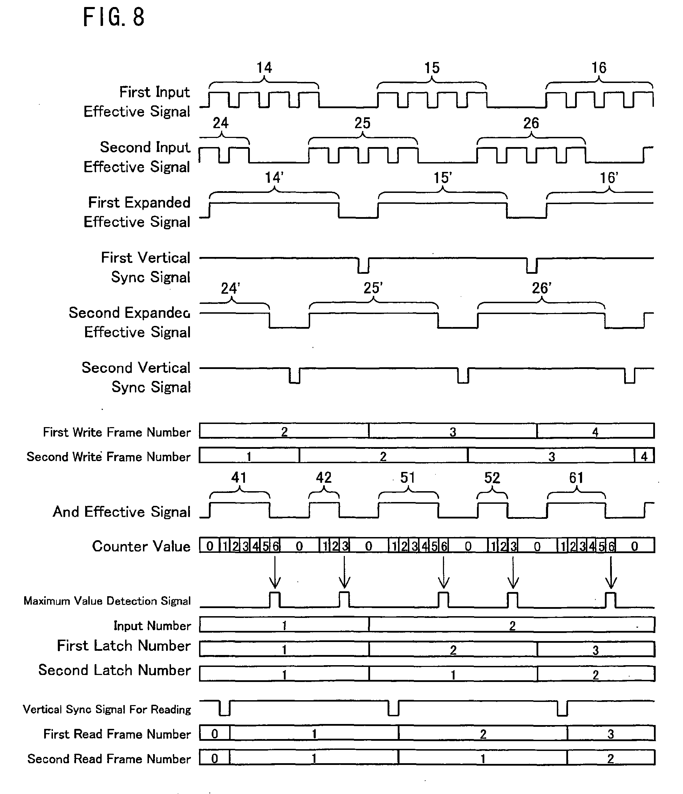

   Fig. 8 is a view describing an example in which read frame numbers are generated by the read frame number generation section shown in Fig. 7.
Fig. 9

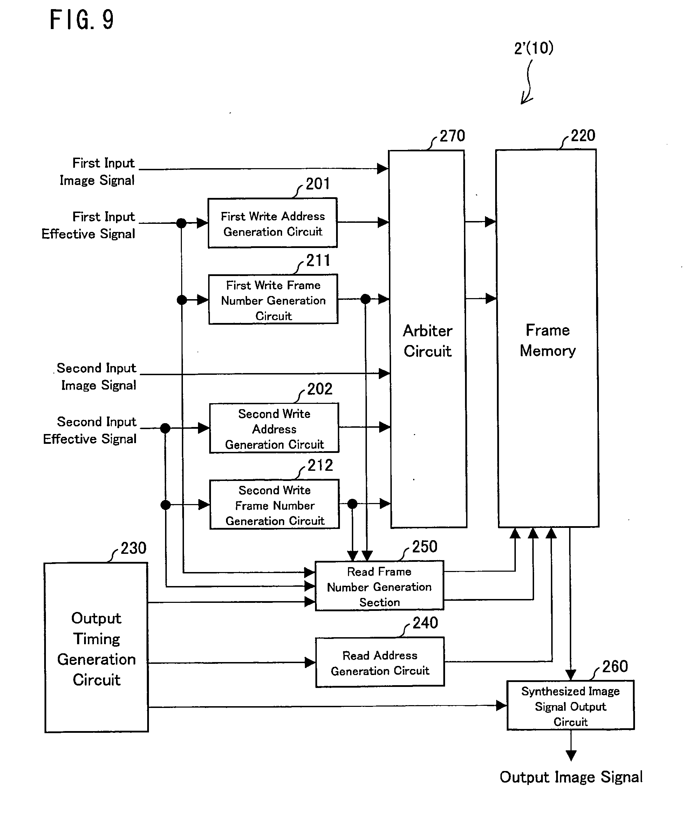

   Fig. 9 is a block diagram schematically illustrating a configuration of an image output device in accordance with Embodiment 4 of the present invention.
Fig. 10
   (a) of Fig. 10 is a view illustrating a frame memory divided so as to correspond to two frames. (b) of Fig. 10 is a view illustrating an example of how write frame numbers and read frame numbers are generated in a case where the frame memory of the image output device of Embodiment 1 or 2 of the present invention is divided so as to correspond to two frames.
Fig. 11
   (a) of Fig. 11 is a view illustrating a frame memory divided so as to correspond to three frames. (b) of Fig. 11 is a view illustrating an example of how write frame numbers and read frame numbers are generated in a case where the frame memory of the image output device of Embodiment 1 or 2 of the present invention is divided so as to correspond to three frames. (c) of Fig. 11 is a view illustrating an example of how write frame numbers and read frame numbers are generated in a case where the frame memory of the image output device of Embodiment 3 or 4 of the present invention is divided so as to correspond to three frames.
Fig. 12

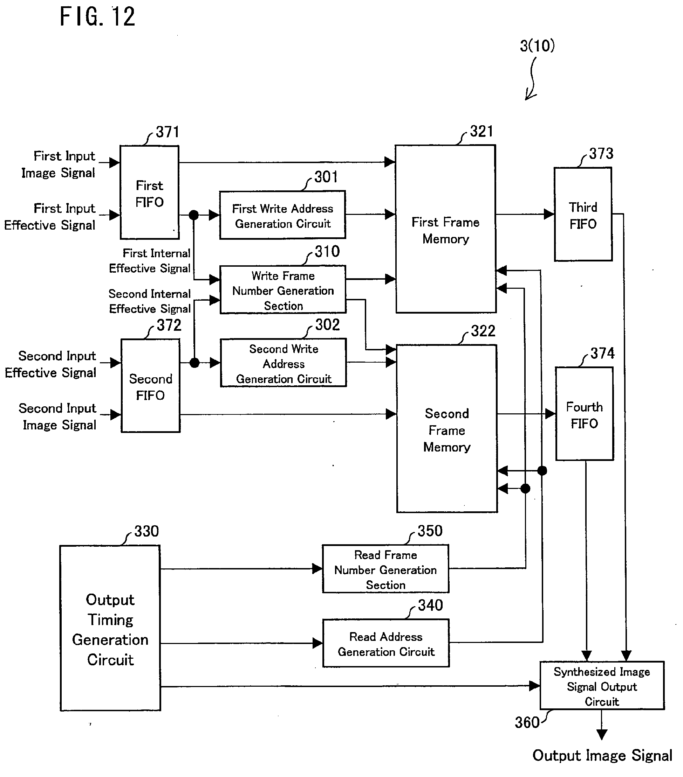

   Fig. 12 is a block diagram schematically illustrating a configuration of an image output device in accordance with Embodiment 6 of the present invention.
Fig. 13
   (a) of Fig. 13 is a view illustrating an example of how write frame numbers and read frame numbers are generated in a case where each effective period of an input image signal is adjusted to be two thirds. (b) of Fig. 13 is a view illustrating an example of how write frame numbers and read frame numbers are generated in the image output device shown in Fig. 12.

### Description of Embodiments

The following description discusses embodiments of the present invention in detail.

The present invention provides an image output device which is capable of reducing tearing of an output image even if, when synthesizing a plurality of input image signals and outputting a synthesized image signal as a single image, the plurality of input image signals inputted to be synthesized to be a single image are not synchronized with each other and the plurality of input image signals are out of sync with each other.

For easier understanding of the present invention, the following embodiments of the present invention discuss a case where a single image is divided into two and transmitted via two cables. That is, the following embodiments discuss a case where an input image signal is divided into two parts consisting of upper and lower parts and these two parts are transmitted via two cables. Needless to say, the present invention is effective also in a case where an image signal is divided into three or more signals and then inputted.

### Embodiment 1

Fig. 2 is a block diagram schematically illustrating a configuration of an image output device 1 of the present embodiment. As illustrated in Fig. 2, the image output device 1 includes mainly a signal synthesis section 10 for synthesizing input image signals. In addition to the signal synthesis section 10, the image output device 1 includes an image input terminal, an image output terminal, a power supply section and the like (these are not illustrated). The signal synthesis section 10 includes: a first write address generation circuit 101 and a second write address generation circuit 102; a write frame number generation section 110; a first frame memory 121 and a second frame memory 122; an output timing signal generation circuit 130; a read address generation circuit 140; a read frame number generation section 150; and a synthesized image signal output circuit 160, and the like.

Note here that the first write address generation circuit 101, the second write address generation circuit 102 and the write frame number generation section 101 serve as a writing section for writing input image signals to the frame memories.

Further, the output timing signal generation circuit 130, the read address generation circuit 140, the read frame number generation section 150 and the synthesized image signal output circuit 160 serve as a reading section for reading out the input image signals having been written to the frame memories.

Further, the words "first" and "second" used in circuits' names correspond to a first input image signal and a second input image signal, respectively, into which an image signal has been divided.

The write address generation circuits count respective two input effective signals, and generate write addresses for the respective two input effective signals. Note, here, that each of the input effective signals is (i) a signal corresponding to an input image signal, which is an image signal inputted to the image output device, and also is (ii) a signal that is effective during periods, in the input image signal, during which an image signal exists. In other words, each of the input effective signals is a signal that is effective during periods other than horizontal blanking periods in an input image signal.

According to the present embodiment, an input image signal is divided into two input image signals. For example, the input image signal is divided into an input image signal corresponding to an upper part of a display screen and an input image signal corresponding to a lower part of the display screen. Further, the foregoing input effective signals include a first input effective signal and a second input effective signal, which correspond to the input image signal corresponding to the upper part and the input image signal corresponding to the lower part, respectively.

For this reason, as described earlier, the image output device 1 of the present embodiment includes, as the write address generation circuits, (i) the first write address generation circuit 101 which receives the first input effective signal and (ii) the second write address generation circuit 102 which receives the second input effective signal.

The write frame number generation section 110 carries out the logical AND between (finds out overlap between) the two input effective signals, which are signals indicative of effective periods of the two input image signals, to thereby obtain an AND effective signal, and counts an effective period of the AND effective signal. Then, the write frame number generation section 110 generates write frame numbers for the input image signals so that input image signals having the longest effective periods are stored in the same frame. To this end, the first input image signal and the second input image signal are supplied to the write frame number generation section 110.

It should be noted that the phrase "carries out the logical AND between effective signals" means finding a period during which both of the two input effective signals are being in an ON state.

A frame memory is a memory to which an input image signal is to be written. The input image signal is written to a position, in the frame memory, which is specified by the foregoing write address and write frame number.

According to the present embodiment, there are two input image signals: the first input image signal and the second input image signal. Therefore, the number of the frame memories is also two. These two frame memories are provided in such a way as to correspond to the respective first and second input image signals. Specifically, there are provided (i) the first frame memory 121 which receives the first input image signal and (ii) the second frame memory 122 which receives the second input image signal.

The first frame memory 121 receives a write address from the first write address generation circuit 101, and receives a write frame number from the write frame number generation section 110.

Similarly, the second frame memory 122 receives a write address from the second write address generation circuit 102, and receives a write frame number from the write frame number generation section 110.

The output timing signal generation circuit 130 generates an output timing signal, in synchronization with which the input image signals are outputted in an order configured in advance.

The read address generation circuit 140 counts the output timing signal thus generated, and generates a read address.

The read frame number generation section 150 generates frame numbers, which are for reading out image signals from the first and second frame memories 121 and 122.

The read address and the read frame number thus generated are supplied to and stored in each of the frame memories (the first frame memory 121 and the second frame memory 122).

The synthesized image signal output circuit 160 reads out, from the first frame memory 121 and the second frame memory 122, input image signals each stored in a position (frame memory region) specified by the read address and the read frame number. The synthesized image signal output circuit 160 then synthesizes the input image signals and output an image signal in accordance with an output timing.

Specifically, the frame memories each have a plurality of frame memory regions. Each of the frame memory regions corresponds to a capacity for one (1) frame. Further, each of the frame memory regions is allocated a number, which is an index for its identification.

The phrase "a position is specified by a read address and a read frame number" means that, for example, a frame memory region is specified with use of the index.

It should be noted that, for easier understanding of the description, detailed descriptions of parts and their operations that are often used in this field are omitted here.

In the present embodiment, since circuits other than the write frame number generation section 110 operate in the same manner as and have the same effects as corresponding circuits in a usual image output device, their descriptions are omitted here. That is, in the present embodiment, operations and effects etc. of the write frame number generation section 110 only are described in detail.

Fig. 1 is a block diagram schematically illustrating a configuration of the write frame number generation section 110 shown in Fig. 2. As illustrated in Fig. 1, the write frame number generation section 110 includes expansion circuits (111, 112), an AND circuit 113, a counter 114, a maximum value detection circuit 115, a frame number counter 116, and the like. The expansion circuits 111 and 112 expand inputted effective signals (first and second input effective signals). The AND circuit 113 carries out the logical AND between the input effective signals thus expanded (expanded input effective signal). The counter 114 counts a period during which an AND effective signal is at a high level. The maximum value detection circuit 115 (i) compares, at a time when the AND effective signal changes from a high level to a low level, a current maximum value with a previous maximum value which are obtained by the counter 114 and (ii) outputs an input number depending on the result of the comparison. The frame number counter 116 (a) determines write frame numbers for input image signals based on the input number supplied from the maximum value detection circuit 115 and (b) outputs the write frame numbers.

More specifically, according to the image output device 1 (refer to Fig. 2) of the present embodiment, there are two input effective signals: the first input effective signal and the second input effective signal. Therefore, the number of the expansion circuits is also two. That is, there are provided (i) the first expansion circuit 111 which receives the first input effective signal and (ii) the second expansion circuit 112 which receives the second input effective signal.

The first expansion circuit 111 outputs a first expanded input effective signal, which is an effective signal obtained by expanding the first input effective signal. Similarly, the second expansion circuit 112 outputs a second expanded input effective signal, which is an effective signal obtained by expanding the second input effective signal.

The first expanded input effective signal and the second expanded input effective signal are inputted to the AND circuit 113. The AND circuit 113 carries out the logical AND between the first expanded input effective signal and the second expanded input effective signal. The result of the logical AND is supplied to the counter 114 and to the maximum value detection circuit 115.

Further, a first vertical sync signal and a second vertical sync signal, which are vertical sync signals corresponding to the respective first and second input image signals, are capable of being inputted to the maximum value detection circuit 115 and to the frame number counter 116.

Then, the frame number counter 116 supplies a first write frame number and a second write frame number to the first frame memory 121 and the second frame memory 122 shown in Fig. 2, respectively.

### [1-1]

The following description specifically discusses, with reference to Figs. 1 and 3, the steps of determining write frame numbers by the write frame number generation section 110.

Assume that two input image signals inputted not in synchronization with each other, one of which is an input image signal for an upper part and the other is an input image signal for a lower part, are allocated respective input numbers 1 and 2. Note here that one of the input image signals serves as a reference input image signal and the other serves as the other input image signal to be synthesized with the reference input image signal (the same applies also to the following descriptions). Further, assume that an input effective signal that corresponds to the input image signal for the upper part is referred to as a first input effective signal, and an input effective signal that corresponds to the input image signal for the lower part is referred to as a second input effective signal.

In the present embodiment, the following description discusses a case where the second input effective signal is inputted earlier than the first input effective signal, to a limited extent. That is, the following description discusses a case where the second input image signal corresponding to the second input effective signal is inputted earlier than the first input image signal corresponding to the first input effective signal.

As illustrated in Fig. 3, effective signals ... , 14, 15, 16, ... are each inputted as the first input effective signal, and effective signals ..., 24, 25, 26, ... are each inputted as the second input effective signal. It is assumed in Fig. 3 that, for example, the effective signals 14 and 24 for the upper and lower parts are to be synthesized, the effective signals 15 and 25 for the upper and lower parts are to be synthesized, the effective signals 16 and 26 for the upper and lower parts are to be synthesized, and so on, and synthesized signals are to be each outputted as an output image while suppressing tearing.

First, attention should be drawn to the first input effective signal and the second input effective signal. Since each of the first and second input effective signals is separated by horizontal blanking periods, the first input effective signal is concatenated in the first expansion circuit 111, and the second input effective signal is concatenated in the first expansion circuit 112. Specifically, the first expansion circuit 121 shown in Fig. 1 expands the first input effective signal to generate a first expanded input effective signal including expanded effective signals ..., 14', 15', 16', ... as shown in Fig. 3, and the second expansion circuit 112 shown in Fig. 1 expands the second input effective signal to generate a second expanded input effective signal including expanded effective signals .., 24', 25', 26', ... as shown in Fig. 3.

Further, a vertical blanking period is detected, and a vertical sync signal corresponding to each input number is generated. Note here that, since the vertical sync signal can be generated by a usual technique used in this filed, detailed description of how to generate the vertical sync signal is omitted here. The vertical sync signal used here may be a separately supplied signal. In the present embodiment, a first vertical sync signal and a second vertical sync signal are generated in such a way as to correspond to the first input effective signal and the second input effective signal, respectively (i.e., in such a way as to correspond to the first input image signal and the second input image signal, respectively).

Next, both the first expanded input effective signal and the second expanded input effective signal are inputted to the AND circuit 113 (refer to Fig. 1). The AND circuit 113 carries out the logical AND between the first and second expanded input effective signals to thereby output an AND effective signal. For example, (i) when the AND circuit 113 carries out the logical AND between the expanded input effective signal 14' and second expanded input effective signals, AND effective signals 41 and 42 are generated, (ii) when the AND circuit 113 carries out the logical AND between the expanded input effective signal 15' and second expanded input effective signals, AND effective signals 51 and 52 are generated, and (iii) when the AND circuit 113 carries out the logical AND between the expanded input effective signal 16' and a second expanded input effective signal, an AND effective signal 61 is generated (see Fig. 3).

Next, the AND effective signals are inputted to the counter 114 (refer to Fig. 1), and the counter 114 counts effective periods during which the AND effective signals are at a high level (i.e., effective periods during which the AND is "1"). That is, the counter 114 does not increment a counter value when an AND effective signal is at a low level (i.e., the AND is "0"), and increments the counter value by one unit when an AND effective signal is at a high level. For example, as illustrated in Fig. 3, the maximum counter value is 3 in a case where the counter counts each of the AND effective signals 41, 51 and 52, and the maximum counter value is 6 in a case where the counter counts each of the AND effective signals 42, 52 and 62.

While the counter 114 counts each of the AND effective signals, the maximum value detection circuit 115 (refer to Fig. 1) compares, at a time when such each of the AND effective signals changes from a high level to a low level (i.e., at a time when the AND changes from "1" to "0"), a current maximum counter value obtained by count of an effective period of a current AND effective signal with a previous maximum counter value obtained by count of an effective period of a previous AND effective signal.

If the comparison shows that the current maximum counter value is the largest, the counter stores therein the input number of an effective signal whose corresponding expanded effective signal has changed. Then, upon input of a vertical sync signal, the counter supplies the input number stored therein to the frame number counter and stores the maximum value, and thereafter resets the maximum value.

For example, the following provides descriptions by taking as an example the AND effective signals 41 and 42. In this case, the foregoing comparison is carried out such that the previous maximum counter value 3 obtained by count of the AND effective signal 41 is compared with the current maximum counter value 6 obtained by count of the AND effective signal 42. Since this comparison shows that the maximum counter value for the AND effective signal 42 is the largest, a change in an expanded effective signal is checked at a time when the AND of the AND effective signal 42 changes from "1" to "0" (i.e., at the rightmost edge of the AND effective signal 42). Since the check shows that the expanded input effective signal 24 has changed, the counter stores therein the input number "2" of a corresponding expanded effective signal. Then, upon input of the first vertical sync signal (i.e., the other vertical sync signal) that is different from a vertical sync signal corresponding to the input number 2 thus stored, the counter supplies the stored input number 2 to the frame number counter and then resets the counter value. Then, the counter starts counting an effective period of a next AND effective signal 51 at a high level.

On the other hand, if the current maximum counter value is not the largest, then the counter resets the current counter value and starts counting an effective period of a next AND effective signal at a high level.

For example, in a case where the AND effective signal 51 is currently being counted, the current maximum counter value 3 obtained by count of the AND effective signal 51 is compared with the previous maximum counter value 6 obtained by count of the AND effective signal 42. Since the comparison shows that the current maximum counter value is not the largest, the counter stores therein the current maximum counter value and then resets the counter value, and starts counting the next AND effective signal 52. The AND effective signal 52 and the AND effective signal 51 are compared in the same manner as above.

As described above, the counter counts and compares effective periods of AND effective signals, thereby the input numbers for the signals for the upper and lower parts are determined.

Note here that the input number means the number allocated to each of a plurality of input image signals (or to each of corresponding input effective signals), into which an input image signal has been divided. In the present embodiment, the input number is such that the input number 1 or the input number 2. Note, however, that the input number is not limited to the above. That is, the input number can be written in any character provided that the input number makes it possible to clearly distinguish each of a plurality of image signals.

Subsequently, the frame number counter 116 (refer to Fig. 1) increments a write frame number for an input image signal corresponding to the input number, in synchronization with a vertical sync signal corresponding to this input number. Subsequently, the frame number counter 116 causes a write frame number for the other input image signal to be the same as this incremented number, in synchronization with a vertical sync signal (the other vertical sync signal) that is different from the vertical sync signal corresponding to the input number. The frame number counter 116 then supplies, to corresponding frame memories (the first frame memory 121 and the second frame memory 122 shown in Fig. 1), these two write frame numbers (the first write frame number and the second write frame number) corresponding to respective input numbers determined in a manner described above.

For example, in a case where the input number is 2 as in the present embodiment, the second write frame number is incremented at a time when the second vertical sync signal is inputted (i.e., at a time when the signal level changes from "0" to "1"). That is, a write frame number allocated to a previous image signal is incremented by one unit. Then, at a time when the first vertical sync signal is inputted (i.e., at a time when the signal level changes from "0" to "1"), the first write frame number is caused to be the same as the second write frame number.

It should be noted here that the write frame number means the number in a frame memory, which number is allocated to each of a plurality of input image signals so that, during synthesis and output, image signals having the same frame numbers are synthesized to be outputted as a single image.

In this way, the write frame number generation section allocates a frame number to each of a plurality of image signals inputted not in synchronization with each other, and image signals having the same frame numbers are synthesized to be outputted as a single image.

### [1-2]

The following description discusses, with reference to Figs. 1 and 4, another example of the steps of determining write frame numbers. The following description also discusses a case where a single image is divided into two and these two are transmitted via two cables, i.e., a case where an input image signal is divided into two for the upper part and for the lower part.

It should be noted that, although the present example discusses a case where signals having the same waveforms as those of the image signals in the foregoing example are inputted, the present example is different from the foregoing example in that the first input effective signal (first input image signal) is inputted earlier than the second input effective signal (second input image signal), to a limited extent. That is, the following description discusses a case where the first input image signal corresponding to the first input effective signal is inputted earlier than the second input image signal corresponding to the second input effective signal.

Further, for convenience of description, the names and reference numbers of signals are the same as those in the foregoing example.

According to the present example, the first input effective signal for the upper part and the second input effective signal for the lower part are expanded, and an AND effective signal is generated in the AND circuit. Then, the counter counts an effective period of the AND effective signal. Since these processes are the same as those in the foregoing example, further descriptions thereof are omitted here.

Note however that, according to the present example, the order of input of the image signals for the upper part and for the lower part is different from (opposite to) that in the foregoing example. Accordingly, (i) the result of the logical AND between the first expanded input effective signal and the second expanded input effective signal and (ii) the counter value obtained by the counter counting the effective period of the AND effective signal are different from those in the foregoing example.

For example, as illustrated in Fig. 4, the maximum counter value obtained by the counter 114 (refer to Fig. 1) counting each of the AND effective signals 41, 51 and 52 is 6, and the maximum counter value obtained by the counter 114 counting each of the AND effective signals 42, 52 and 62 is 3.

This is described below by taking the AND effective signals 41 and 42 as examples. In this case, a previous maximum counter value 6 obtained by count of the AND effective signal 41 is compared with a current maximum counter value 3 obtained by count of the AND effective signal 42. Since the comparison shows that the current maximum counter value is not the largest, the counter 114 resets the counter value and then starts counting the next AND effective signal 51.

Further, the maximum value detection circuit 115 (refer to Fig. 1) compares (i) the previous maximum counter value 3 which is obtained by count of the AND effective signal 42 and is stored with (ii) a current maximum counter value 6 obtained by count of the AND effective signal 51. This comparison shows that the maximum counter value for the AND effective signal 51 is the largest. Therefore, it is checked that the expanded input effective signal 14 has changed at a time when the AND of the AND effective signal 51 changes from "1" to "0" (i.e., at the rightmost edge of the AND effective signal 51). Then, the counter stores therein the input number 1 of a corresponding effective signal. Then, upon input of the first vertical sync signal which is a vertical sync signal corresponding to the input number 1 thus stored, the counter outputs the input number 1 thus stored, resets the counter value for the effective period of the AND effective signal 51, and thereafter starts counting an effective period of a next AND effective signal at a high level.

Subsequently, the frame number counter 116 (refer to Fig. 1) determines a write frame number for each input image signal, in synchronization with the first vertical sync signal corresponding to the input number 1. The frame number counter 116 then provides the same frame number to the other input image signal in synchronization with the other vertical sync signal.

That is, in a case where the input number is 1, the first write frame number is incremented by one unit at a time when the first vertical sync signal is inputted (at a time when the signal level changes from "0" to "1"), as compared with the number allocated to a previous input image signal. Then, at a time when the second vertical sync signal (the other vertical sync signal) is inputted (at a time when the signal level changes from "0" to "1"), the second write frame number is caused to be the same as the first write frame number. Then, the frame number counter 116 supplies, to corresponding frame memories (the first frame memory 121 and the second frame memory 122 shown in Fig. 1), the foregoing two write frame numbers (the first write frame number and the second write frame number) which have been determined as above and correspond to respective input numbers.

In this way, the write frame number generation section 110 (i) allocates frame numbers to a plurality of image signals that are inputted not in synchronization with each other, (ii) synthesizes input image signals having the same frame numbers, and (iii) outputs synthesized image signal as a single image.

### Embodiment 2

Fig. 5 is a block diagram schematically illustrating a configuration of an image output device 1' in accordance with another embodiment of the present invention. As illustrated in Fig. 5, the image output device 1' of the present embodiment is different from the image output device 1 of Embodiment 1 shown in Fig. 2 in that the image output device 1' further includes an arbiter circuit 170 serving as a write control section. More specifically, the image output device 1' of the present embodiment further includes the arbiter circuit 170 in the writing section of the signal synthesis section 10.

That is, the image output device of the present embodiment includes: a first write address generation circuit 101 and a second write address generation circuit 102; a write frame number generation section 110; the arbiter circuit 170; a frame memory 120; an output timing signal generation circuit 130; a read address generation circuit 140; a read frame number generation section 150; a synthesized image signal output circuit 160; and the like. Since parts other than the arbiter circuit 170 are substantially the same as those in Embodiment 1, their descriptions are summarized.

As illustrated earlier, the write address generation circuits (the first write address generation circuit 101 and the second write address generation circuit 102) count respective two input effective signals (the first input image signal and the second input image signal) and generate write addresses for the two input image signals. The write frame number generation section 110 (i) carries out the logical AND between the input effective signals, which are the signals indicative of effective periods of the two input image signals, to obtain an AND effective signal, (ii) counts an effective period of the AND effective signal, and (iii) generates the write frame numbers for input image signals so that image signals having the longest effective periods are to be stored in the same frame.

The frame memory 120 is a memory to which an input image signal is to be written. The input image signal is written to a position, in the frame memory, which is specified by the write address and the write frame number. Note here that, according to Embodiment 1, there are provided two frame memories 121 and 122 (refer to Fig. 2) in such a way as to correspond to signals that have been divided to be inputted. In contrast, according to the present embodiment, since the arbiter circuit 170 is provided such that signals are supplied to the arbiter circuit 170 and thereafter to the frame memory 120, it is possible to obtain the same effect as in Embodiment 1 even with a single frame memory 120.

That is, the arbiter circuit 170 is provided such that signals are supplied to the arbiter circuit 170 and thereafter to the frame memory 120. The arbiter circuit 170 controls timings at which each input image signal, each write address, and the write frame number allocated to each input image signal are inputted to the frame memory 120 so that input image signals are each written one by one to a position specified by the write address and the write frame number.

The output timing signal generation circuit 130 generates an output timing signal, in synchronization with which the input image signals are outputted in an order configured in advance. The read address generation circuit 140 counts the output timing signal thus generated, and generates a read address. The read frame number generation section 150 generates a frame number for reading out an image signal from the frame memory. The synthesized image signal output circuit 160 reads out an input image signal from a position, in the frame memory, which is specified by the read address and the read frame number, synthesizes input image signals thus read out, and outputs synthesized image signal in synchronization with the output timing.

As described above, according to the present example, the use of the arbiter circuit realizes a configuration of the image output device 1 which includes a single frame memory. This makes it possible to reduce the number of the terminals and parts in the entire device, and thus makes it possible to reduce power consumption and costs.

### Embodiment 3

The following description discusses, with reference to Figs. 6 to 8, a configuration and operation of an image output device in accordance with a further embodiment of the present invention.

Note here that, in Embodiments 1 and 2, the following case was discussed. That is, before each of input image signals into which a single image is divided is written to a frame memory, the write frame number generation section allocates the same write frame numbers to corresponding frames of the respective input image signals. Then, when the input image signals are to be read out from the frame memory, the input image signals having the same write frame numbers are read out and synthesized to be outputted as the single image.

In contrast, according to the image output device of the present embodiment, input image signals having written to a frame memory are synthesized, while being associated with each other, to be outputted as a single image. That is, the input image signals are associated with each other when they are read out from the frame memory, instead of when they are written to the frame memory. The following description discusses such a configuration by taking as an example a case where an image signal is divided into two signals.

That is, according to the present embodiment, the operations that are the same as those carried out by the write frame number generation section in Embodiments 1 and 2 are carried out by the read frame number generation section.

Further, according to the present embodiment, latch circuits are provided in the read frame number generation section. This achieves the configuration in which (i) input image signals into which a single image is divided are not allocated the same write frame numbers, i.e., the input image signals are not subjected to anything before being written to the frame memory, and (ii) the input image signals are synthesized, when they are read out from the frame memory, to be outputted as an appropriate single image.

It should be noted that the latch circuits are not essential, and the configuration of the read frame number generation section can be variously altered.

The following provides more specific descriptions.

Fig. 6 is a block diagram schematically illustrating a configuration of an image output device 2 in accordance with the present embodiment, more specifically a configuration of a signal synthesis section 10. As illustrated in Fig. 6, the image output device 2 includes: a first write address generation circuit 201 and a second write address generation circuit 202; a first write frame number generation section 211 and a second write frame number generation section 212; a first frame memory 221 and a second frame memory 222; an output timing signal generation circuit 230; a read address generation circuit 240; a read frame number generation section 250; a synthesized image signal output circuit 260; and the like.

The first write address generation circuit 201, the second write address generation circuit 202, the first write frame number generation section 211 and the second write frame number generation section 212 serve as a writing section for writing input signals to the frame memories.

Further, the output timing signal generation circuit 230, the read address generation circuit 240, the read frame number generation section 250 and the synthesized image signal output circuit 260 serve as a reading section for reading out the input image signals written to the frame memories.

The first write address generation circuit 201 and the second write address generation circuit 202 count a first input image signal and a second input image signal, respectively, and generate write addresses for the first input image signal and the second input image signal.

The first write frame number generation section 211 and the second write frame number generation section 212 generate write frame numbers for the first input image signal and the second input image signal, when the first input image signal and the second input image signal are written to the first frame memory 221 and the second frame memory 222, respectively.

Then, the first input image signal is written to a position specified by the write address and the write frame number in the first frame memory 221, and the second input image signal is written to a position specified by the write address and the write frame number in the second frame memory 222.

The output timing signal generation circuit 230 generates an output timing signal, in synchronization with which the input image signals are outputted in an order configured in advance. The read address generation circuit 240 counts the output timing signal thus generated, and generates a read address.

The read frame number generation section 250 (i) carries out the logical AND between first and second input effective signals, which are the signals indicative of effective periods of the first and second input image signals, to obtain an AND effective signal, (ii) counts an effective period of the AND effective signal, and (iii) determines a read frame number for each of the input image signals so that input image signals having the longest effective periods are read out simultaneously from their corresponding frame memories.

The read address and the read frame number generated like above are supplied to the frame memories (the first frame memory 221 and the second frame memory 222).

Then, the synthesized image signal output circuit 260 (i) reads out the input image signals from respective positions, in the first frame memory 221 and the second frame memory 222, each of which is specified by the read address and the read frame number, (ii) synthesizes the input image signals and (iii) outputs a synthesized image signal in synchronization with the output timing.

The following description discusses, with reference to Figs. 7 and 8, a configuration of the read frame number generation section 250 and processes carried out by constituents of the read frame number generation section 250 in detail.

Fig. 7 is a block diagram schematically illustrating a configuration of the read frame number generation section 250. As illustrated in Fig. 7, the read frame number generation section 250 includes: first and second expansion circuits 251 and 252; an AND circuit 253; a first counter 254; and a maximum value detection circuit 255. The first and second expansion circuits 251 and 252 expand respective first and second input effective signals inputted thereto. The AND circuit 253 carries out the logical AND between input effective signals thus expanded (expanded input effective signals). The first counter 254 counts a period during which an AND effective signal is at a high level. The maximum value detection circuit 255 compares, at a time when the AND effective signal changes from a high level to a low level, a current maximum value obtained by the first counter 254 with a previous maximum value obtained by the first counter 254, and outputs an input number depending on the result of the comparison. These configurations are the same as those in the write frame number generation section in Embodiment 1. Further, subsequent to these processes, the first and second input effective signals for the upper and lower parts are expanded in the first expansion circuit 251 and the second expansion circuit 252, respectively. Then, the AND circuit 253 generates the AND effective signal. Then, the first counter 254 counts an effective period of the AND effective signal. Then, the maximum value detection circuit 255 compares the results of the counts to determine an input number. These processes are also the same as those in the example shown in Fig. 3.

The read frame number generation section 250 further includes a second counter 256a and a third counter 256b for counting effective periods of the first and second vertical sync signals, which correspond to the respective first and second input effective signals. Therefore, the first write frame number generation section 211 (refer to Fig. 6) generates, at a time when the first vertical sync signal changes from a low level to a high level (i.e., at a time when the signal level changes from "0" to "1"), the first write frame number corresponding to the first input image signal, and stores it in the first frame memory 221. Similarly, the second write frame number generation section 212 (refer to Fig. 6) generates, at a time when the second vertical sync signal changes from a low level to a high level (i.e., the signal level changes from "0" to "1"), the second write frame number corresponding to the second input image signal, and stores it in the second frame memory 222.

Further, the read frame number generation section 250 includes the latch circuits for temporality storing frame numbers therein. The following description discusses processes carried out by the latch circuits.

The read frame number generation section 250 stores, as a pair, (i) a write frame number for an input effective signal corresponding to the input number determined on the basis of the processes carried out by the maximum value detection circuit and (ii) a write frame number for the other input effective signal which shares the longest effective period with the input effective signal. Then, the read frame number generation section 250 stores these write frame numbers in the respective first and second latch circuits 257a and 257b.

After that, in accordance with a vertical sync signal for reading, the write frame numbers temporarily stored in the first and second latch circuits 257a and 257b are transferred to third and fourth latch circuits 258a and 258b, respectively. Then, the write frame numbers are used as respective first and second read frame numbers.

In this way, the read frame number generation section 250 generates the read frame numbers for a plurality of image signals inputted not in synchronization with each other. That is, the read frame number generation section 250 stores, as a pair, the read frame numbers indicative of an appropriate pair of image signals to be synthesized, and then synthesizes input image signals indicated by the pair of the read frame numbers. In this way, a single image without tearing is outputted.

It should be noted that the phrase "synthesizes input image signals indicated by an appropriate pair of read frame numbers" means that, for example, out of a plurality of frame memory regions in the frame memories, frame memory regions that correspond to the appropriate pair are specified with use of the foregoing indices and the image signals are synthesized.

### Embodiment 4

Fig. 9 is a block diagram schematically illustrating a configuration of an image output device 2' in accordance with still a further embodiment of the present invention. As illustrated in Fig. 9, the image output device 2' of the present embodiment is different from the image output device 2 of Embodiment 3 shown in Fig. 6 in that the image output device 2' further includes an arbiter circuit 270 serving as a write control section. More specifically, the image output device 2' further includes the arbiter circuit 270 in the writing section of the signal synthesis section 10 of the image output device 2.

The following description mainly discusses differences between the image output device 2' and the image output device 2 of Embodiment 3, and omits descriptions for parts that are the same as those in the image output device 2.

Note here that the arbiter circuit 270 has the same functions as those of the arbiter circuit 170 described in Embodiment 2.

The arbiter circuit 270 is provided such that signals are supplied to the arbiter circuit 270 and thereafter to the frame memory 220. The arbiter circuit 270 controls timings at which each input image signal, each write address, and the write frame number allocated to each input image signal are inputted to the frame memory 220 so that the input image signals are each written one by one to a position specified by the write address and the write frame number.

As described above, according to the present example, the use of the arbiter circuit realizes an image output device which includes a single frame memory. This makes it possible to reduce the number of the terminals and parts in the entire device, and thus possible to reduce power consumption and costs.

### Embodiment 5

According to Embodiments 1 to 4, in a case of dividing a single image into a plurality of input image signals and transmitting the plurality of input image signals, it is possible to suppress tearing that occurs between such input image signals. That is, it is possible to suppress tearing between frames.

In the present embodiment, a configuration related to suppressing tearing within a frame is discussed.

According to the present embodiment, it is possible to reduce, with use of a minimum frame memory, tearing that occurs within a frame and tearing that occurs between frames, by dividing a single frame memory into frame memory regions corresponding to three frames. The following description specifically discusses such a configuration by taking as an example a case where an image signal is divided into two.

First, the following description discusses a comparative example in which, in the image output device of Embodiments 1 and 2, a single frame memory is divided into frame memory regions corresponding to two frames. Specifically, the following description discusses a case where a single frame memory is divided into frame memory regions corresponding to two frames that are allocated the frame number 0 and the frame number 1, respectively (see (a) of Fig. 10).

The write frame number generation section of Embodiments 1 and 2 generates the first and second write frame numbers for the respective first and second input image signals.

Here, the first and second input image signals are allocated the write frame numbers "0" and "1" which are switched in such a way as to correspond to the respective frame numbers 0 and 1 (see (b) of Fig. 10).

It should be noted here that, as described in Embodiments 1 and 2, the first write frame number and the second frame number are the write frame numbers generated for the respective first and second input image signals in the following manner. That is, the write frame number generation section carries out the logical AND between the input effective signals indicative of effective periods of the two input image signals to obtain an AND effective signal, counts an effective period of the AND effective signal, and generates a write frame number so that input image signals having the longest effective periods are stored in the same frame.

According to the example shown in (b) of Fig. 10, first and second input image signals each having the write frame number "0" (shaded portion), i.e., input image signals having the same write frame numbers, are synthesized and outputted as a single image.

It should be noted here that, when the first and second input image signals having the same write frame numbers are to be read out in the order of read frame numbers generated by the read frame number generation section, a read frame number may overlap the first write frame number or the second write frame number at a time when the first and second input image signals are read out. In this case, it is unclear which write frame number corresponds to the read frame number. Therefore, even if a write frame number corresponding to a single read frame number is read out, tearing may occur in a resulting output image.

For example, when an input image signal that corresponds to the read frame number "0" is to be read out in the order of read frame numbers, the read frame number ("0") partially overlaps the second write frame number (see region A' in (b) of Fig. 10). Therefore, in the region A', the write frame number ("0") which has not yet been completely written is to be read out.

In contrast, according to the present embodiment, it is possible to solve the above problem in which a read frame number overlaps a write frame number, by dividing a single frame memory into frame memory regions corresponding to three frames.

For example, as illustrated in (a) of Fig. 11, a single frame memory is divided into frame memory regions corresponding to three frames. The frame memory regions are allocated the frame numbers 0, 1 and 2, respectively. Further, as illustrated in (b) of Fig. 11, each of first and second write frame numbers is generated by switching in the order of "0", "1", "2" and then "0" in such a way as to correspond to the frame numbers, and read frame numbers corresponding to the first and second write frame numbers are generated.

In this case, when a certain read frame number is read out, the read frame number overlaps neither the first write frame number nor the second write frame number (see regions A, B and C ... in (b) of Fig. 11). Therefore, the first and second write frame numbers corresponding to the read frame number can be surely read out when input image signals are to be read out, because the read frame number overlaps neither the first write frame number not the second write frame number. (c) of Fig. 11 is a view illustrating how signals are generated in a case where a single frame memory is divided into frame regions corresponding to three frames in the image output device of Embodiments 3 and 4.

In this case, first and second write frame numbers are generated by switching in the order of "0", "1", "2" and then "0", and the read frame number generation section carries out a series of processes as described in Embodiments 3 and 4 to thereby determine which first and second write frame numbers are to be paired. The read frame number generation section then generates first and second read frame numbers corresponding to the first and second write frame numbers, in synchronization with a vertical sync signal for reading.

Then, input image signals are read out with use of a pair of first and second read frame numbers. Here, no overlap occurs between the first read frame number and the first write frame number, and between the second read frame number and the second write frame number (see (c) of Fig. 11).

According to the present embodiment, it is possible to reduce, with a small number of frame memory or frame memories, tearing that occurs within a frame and tearing that occurs between frames.

It should be noted that the configuration in which overlap between a read frame number and a write frame number is prevented by dividing a single frame memory into frame memory regions corresponding to three frames is applicable also to a case where an input image signal is divided into two or more signals.

Further, dividing a frame memory into frame memory regions corresponding to more than three frames brings about the same effect as in a case where a frame memory is divided into frame memory regions corresponding to three frames.

### Embodiment 6

As described in the comparative example in Embodiment 5, in a case where a frame memory is divided into frame memory regions corresponding to two frames, overlap may occur between a read frame number and a write frame number. As a result, it may be impossible to appropriately synthesize a plurality of divided input image signals, and tearing may occur. In this regard, as described in the example in Embodiment 5, it is possible to solve such a problem by dividing a frame memory into frame memory regions corresponding to three frames.

Note, however, that dividing a frame memory into frame memory regions corresponding to three frames is not essential in solving the problem. For example, even in a case where a frame memory is divided into frame memory regions corresponding to two frames as described in the foregoing comparative example, it is possible to prevent overlap between a read frame number and a write frame number by adjusting effective periods of input image signals.

For example, it is possible to solve the problem in the comparative example by adjusting effective periods of input image signals.

Specifically, it is possible to solve the problem in the comparative example even with use of a frame memory having a capacity for two frames, by adjusting effective periods of each input signal and effective periods of each output signal so that each of these effective periods is shorter than two thirds of one (1) frame period.

Specifically, if all periods during each of which an input image signal is being written to a frame memory and all periods during each of which an output image signal is being read out are each shorter than two thirds of one (1) frame period, it is possible to prevent overlap between writing and reading operations to/from an identical frame memory region even in a case where a frame memory corresponds to two frames and the frame numbers are switched such that "0", "1", "0" and then "1".

(a) of Fig. 13 is a view illustrating an example of how write frame numbers and read frame numbers are generated in a case where each effective period of an input image signal is adjusted to be two thirds. Note in (a) of Fig. 13 that blank areas (areas without numbers) each indicative of a period during which neither writing nor reading is being carried out.

As illustrated in (a) of Fig. 13, even under the most severe input condition, i.e., even in a case where a first input effective signal is out of phase with a second input effective signal by 50%, it is possible to carry out control such that no overlap occurs between a write frame number and a read frame number, with use of a frame memory having a capacity for two frames.

Note however that, since generally each effective period of an input image signal is longer than two thirds, the capacity of a frame memory cannot be reduced so as to correspond to two frames. In this regard, it is possible to carry out control such that no overlap occurs between reading and writing operations without changing the capacity of the frame memory, by causing, without adjusting effective periods of an input image signal, the input image signal to pass through a FIFO (First In First Out: a memory having a first-in first-out characteristic) before the input image signal is written to the frame memory and after the input image signal is read out from the frame memory. That is, the FIFO circuit is provided to shorten a writing period and a reading period. Providing a FIFO having a capacity for up to one third of one (1) frame makes it possible to cause each effective period of the input image signal to be shorter than two thirds, in a pseudo manner.

Fig. 12 is a view schematically illustrating a configuration of an image display device 3 including the FIFO.

As illustrated in Fig. 12, a signal synthesis section 10 of the image display device 3 includes a first FIFO 371 (auxiliary memory) in an input section of a first frame memory 321 and includes a third FIFO 373 (auxiliary memory) in an output section of the first frame memory 321.

Similarly, the signal synthesis section 10 of the image display device 3 includes a second FIFO 372 (auxiliary memory) in an input section of a second frame memory 322 and includes a fourth FIFO 374 (auxiliary memory) in an output section of the second frame memory 322.

Under such circumstances, for example, input image signals each corresponding to a one third frame are temporarily stored in the respective first and second FIFOs 371 and 372, and the other two thirds of the input image signals are written to the frame memories. In view of this, for the purpose of causing each effective period of each of the input image signals to be shorter than two thirds, the size of each of these FIFOs may be up to a one third frame.

Similarly, when image signals are read out from the frame memories, these image signals are read out while parts thereof each corresponding to a one third frame are temporarily stored in the third and fourth FIFOs 373 and 374.

(b) of Fig. 13 is a view similar to (a) of Fig. 13, and is a view illustrating an example of how write frame numbers and read frame numbers are generated in a case where FIFOs are provided and an internal effective signal is adjusted to be shorter than a two thirds frame period.

As illustrated in (b) of Fig. 13, it is possible to carry out control such that no overlap occurs between a write frame number and a read frame number with use of a frame memory having a capacity for two frames, by providing the FIFOs and causing the internal effective signal to be shorter than a two thirds frame period.

There is no particular limitation on an overall configuration of an image device which employs the image output device of the present embodiment. The following description discusses an example of the configuration.

That is, for example, the image output device is connected with a TV tuner (e.g., connected with an antenna) serving as a first input (corresponding to the first input image signal) and with a player serving as a second input (corresponding to the second input image signal) such as a BD player or a DVD player. Further, the image output device is connected with a display device serving as an output (corresponding to the output image signal) such as a CRT, a liquid crystal display or a PDP.

Note here that, in view of standards, it is difficult to reduce the length of each effective period of a signal supplied from the TV tuner or the player to two thirds by increasing the length of each blanking period.

In this regard, employing the foregoing FIFO makes it possible to reduce the length of the internal effective signal to less than a two thirds frame period. This makes it possible to carry out, with use of a frame memory having a capacity for two frames, control such that no overlap occurs between a write frame number and a read frame number.

It should be noted that the image output device of the present embodiment can bring about the same effect even in a case where the image output device receives three or more inputs.

The present invention is not limited to the descriptions of the respective embodiments, but may be altered within the scope of the claims. An embodiment derived from a proper combination of technical means disclosed in different embodiments is encompassed in the technical scope of the invention.

Further, the image output device in accordance with the present invention is configured such that: in a case where, in each of the input image signals, a period during which a signal based on an image is being inputted is referred to as an effective signal period, the signal synthesis section synthesizes the frames, overlap between frame periods of the frames being long, by synthesizing the reference input image signal and the other(s) of the input image signals such that effective signal periods of the reference input image signal and of the other(s) of the input image signals, overlap between the effective signal periods being long, start simultaneously.

Further, the image synthesizing method in accordance with the present invention is configured such that: in a case where, in each of the input image signals, a period during which a signal based on an image is being inputted is referred to as an effective signal period, the frames, overlap between frame periods of the frames being long, are specified by specifying effective signal periods of the reference input image signal and of the other(s) of the input image signals, overlap between the effective signal periods being long.

According to the image output device or the image synthesizing method, when the frames, overlap between frame periods of the frames being long, are to be synthesized, which frames are to be synthesized is determined on the basis of the overlap between the effective signal periods.

Accordingly, it is possible to easily specify frames that are to be synthesized, by detecting, in each of the input image signals, overlap in periods during which a signal based on an image is being inputted, with use of for example an AND circuit.

Further, the image output device in accordance with the present invention is configured such that: the signal synthesis section includes (i) frame memories which correspond to the respective input image signals and to which the input image signals are to be written and (ii) a writing section for writing the input image signals to the frame memories; each of the frame memories has frame memory regions; each of the frame memory regions is allocated an index for identification of said each of the frame memory regions; and the writing section writes the input image signals to their corresponding frame memories such that the frames, overlap between frame periods of the frames being long, are written to respective frame memory regions in said their corresponding frame memories which frame memory regions are allocated the same indices.

According to the configuration, when the input image signals are written to the frame memories, frames corresponding to each other are written to the frame memory regions allocated the same indices.

Accordingly, it is possible, when reading out the input image signals from the frame memories, to synthesize the frames corresponding to each other without carrying out any particular operation, by for example setting a single read address.

Further, the image output device in accordance with the present invention is configured such that: the signal synthesis section includes (i) frame memories which correspond to the respective input image signals and to which the input image signals are to be written and (ii) a reading section for reading out the input image signals which have been written to the frame memories; each of the frame memories has frame memory regions; each of the frame memory regions is allocated an index for identification of said each of the frame memory regions; and the reading section specifies indices of frame memory regions in the frame memories corresponding to the respective input image signals, from which frame memory regions the respective input image signals are to be read out, such that the frames, overlap between frame periods of the frames being long, are simultaneously read out from these frame memory regions.

According to the configuration, the frames corresponding to each other are specified when the input image signals are read out from the frame memories, and then the input image signals are synthesized.

This makes it possible to simplify writing of the input image signals to the frame memories, and thus makes it possible to achieve for example high-speed writing.

The image output device in accordance with the present invention is configured such that the signal synthesis section includes: a single frame memory to which it is possible to write the input image signals; and a write control section for carrying out control such that the input image signals are written one by one to the single frame memory so that writings of the input image signals do not overlap in time.

According to the configuration, there is provided the write control section for controlling timings at which the input image signals are written.

This makes it possible to write the input image signals to the single frame memory. Accordingly, it is possible to simplify the configuration of the image output device, and thus possible to reduce production costs.

The image output device in accordance with the present invention is configured such that the signal synthesis section includes: frame memories which correspond to the respective input image signals and to which the input image signals are to be written; a writing section for writing the input image signals to the frame memories; and a reading section for reading out the input image signals thus written to the frame memories, each of the frame memories having three frame memory regions, each of the frame memory regions being allocated an index for identification of said each of the frame memory regions, and the writing section and the reading section carrying out writing and reading such that no overlap occurs between writing and reading to/from an identical one of the frame memory regions. According to the configuration, each of the frame memories has the three frame memory regions. Therefore, no overlap occurs between writing and reading to/from an identical frame memory region. This makes it possible to suppress tearing within a frame.

It should be noted that each of the frame memory regions has a capacity corresponding to the data amount of an input image signal for one (1) frame.

Further, the image output device in accordance with the present invention is configured such that the signal synthesis section includes: frame memories which correspond to the respective input image signals and to which the input image signals are to be written; a writing section for writing the input image signals to the frame memories; and a reading section for reading out the input image signals thus written to the frame memories, each of the frame memories having two frame memory regions, each of the frame memory regions being allocated an index for identification of said each of the frame memory regions, in a case where, in each of the input image signals, a period during which a signal based on an image is being inputted is referred to as an effective signal period, the effective signal period being shorter than two thirds of a frame period, and the writing section and the reading section carrying out wiring and reading such that no overlap occurs between writing and reading to/from an identical one of the frame memory regions.

Further, the image output device in accordance with the present invention is configured such that the signal synthesis section includes: frame memories which correspond to the respective input image signals and to which the input image signals are to be written; a writing section for writing the input image signals to the frame memories; a reading section for reading out the input image signals thus written to the frame memories; and auxiliary memories each having a first-in first-out characteristic, the auxiliary memories being provided (i) on a side of the frame memories from which side the input image signals are to be written to the frame memories and (ii) on a side of the frame memories from which side the input image signals are to be read out from the frame memories, each of the auxiliary memories having a capacity of storing an input image signal corresponding to one third or more of a frame period, each of the frame memories having two frame memory regions, each of the frame memory regions being allocated an index for identification of said each of the frame memory regions, and the writing section and the reading section carrying out writing and reading such that no overlap occurs between writing and reading to/from an identical one of the frame memory regions.

According to the configurations, the effective signal period of each of the input image signals is shorter than two thirds of a frame period, or there are provided the auxiliary memories each corresponding to one third or more of a frame period.

This makes it possible to prevent an overlap between writing and reading to/from an identical frame memory region, with use of the frame memories each having only two frame memory regions.

Accordingly, it is possible to achieve, at low production cost, an image output device which suppresses tearing within a frame.

Further, a control program in accordance with the present invention causes a computer to function as the foregoing signal synthesis section.

Further, in a computer-readable recording medium in accordance with the present invention, the foregoing control program is stored.

### Industrial Applicability

The present invention is suitably usable in an image device which, in a case of transmitting a high-resolution image, divides a single image into a plurality of images and transmits the images via a plurality of cables.

### Reference Signs List

- 1: Image output device
- 1': Image output device
- 2: Image output device
- 2': Image output device
- 3: Image output device
- 10: Signal synthesis section
- 121: First frame memory (frame memory)
- 122: Second frame memory (frame memory)
- 221: First frame memory (frame memory)
- 222: Second frame memory (frame memory)
- 220: Frame memory
- 321: First frame memory (frame memory)
- 322: Second frame memory (frame memory)
- 371: First FIFO (auxiliary memory)
- 372: Second FIFO (auxiliary memory)
- 373: Third FIFO (auxiliary memory)
- 374: Fourth FIFO (auxiliary memory)

## Claims

1. FIFO (auxiliary memory) An image output device comprising a signal synthesis section for synthesizing a plurality of input image signals to obtain a synthesized image signal, which image output device outputs a single image based on the synthesized image signal,
in a case where one of the input image signals is referred to as a reference input image signal, the signal synthesis section synthesizing the reference input image signal and the other(s) of the input image signals such that frames of the reference input image signal and of the other(s) of the input image signals which is/are to be synthesized with the reference input image signal, overlap between frame periods of the frames being long, are synthesized.

2. of the frames being long, are synthesized. The image output device according to claim 1, wherein:
in a case where, in each of the input image signals, a period during which a signal based on an image is being inputted is referred to as an effective signal period,
the signal synthesis section synthesizes the frames, overlap between frame periods of the frames being long, by synthesizing the reference input image signal and the other(s) of the input image signals such that effective signal periods of the reference input image signal and of the other(s) of the input image signals, overlap between the effective signal periods being long, start simultaneously.

3. ve signal periods being long, start simultaneously. The image output device according to claim 1 or 2, wherein:
the signal synthesis section includes (i) frame memories which correspond to the respective input image signals and to which the input image signals are to be written and (ii) a writing section for writing the input image signals to the frame memories;
each of the frame memories has frame memory regions;
each of the frame memory regions is allocated an index for identification of said each of the frame memory regions; and
the writing section writes the input image signals to their corresponding frame memories such that the frames, overlap between frame periods of the frames being long, are written to respective frame memory regions in said their corresponding frame memories which frame memory regions are allocated the same indices.

4. ocated the same indices. The image output device according to claim 1 or 2, wherein:
the signal synthesis section includes (i) frame memories which correspond to the respective input image signals and to which the input image signals are to be written and (ii) a reading section for reading out the input image signals which have been written to the frame memories;
each of the frame memories has frame memory regions;
each of the frame memory regions is allocated an index for identification of said each of the frame memory regions; and
the reading section specifies indices of frame memory regions in the frame memories corresponding to the respective input image signals, from which frame memory regions the respective input image signals are to be read out, such that the frames, overlap between frame periods of the frames being long, are simultaneously read out from these frame memory regions.

5. emory regions. The image output device according to claim 1 or 2, wherein the signal synthesis section includes:
a single frame memory to which it is possible to write the input image signals; and
a write control section for carrying out control such that the input image signals are written one by one to the single frame memory so that writings of the input image signals do not overlap in time.

6. do not overlap in time. The image output device according to any one of claims 1 through 4, wherein the signal synthesis section includes:
frame memories which correspond to the respective input image signals and to which the input image signals are to be written;
a writing section for writing the input image signals to the frame memories; and
a reading section for reading out the input image signals thus written to the frame memories,
each of the frame memories having three frame memory regions, each of the frame memory regions being allocated an index for identification of said each of the frame memory regions, and
the writing section and the reading section carrying out writing and reading such that no overlap occurs between writing and reading to/from an identical one of the frame memory regions.

7. regions. The image output device according to any one of claims 2 through 4, wherein the signal synthesis section includes:
frame memories which correspond to the respective input image signals and to which the input image signals are to be written;
a writing section for writing the input image signals to the frame memories; and
a reading section for reading out the input image signals thus written to the frame memories,
each of the frame memories having two frame memory regions, each of the frame memory regions being allocated an index for identification of said each of the frame memory regions,
in a case where, in each of the input image signals, a period during which a signal based on an image is being inputted is referred to as an effective signal period, the effective signal period being shorter than two thirds of a frame period, and
the writing section and the reading section carrying out wiring and reading such that no overlap occurs between writing and reading to/from an identical one of the frame memory regions.

8. regions. The image output device according to any one of claims 1 through 4, wherein the signal synthesis section includes:
frame memories which correspond to the respective input image signals and to which the input image signals are to be written;
a writing section for writing the input image signals to the frame memories;
a reading section for reading out the input image signals thus written to the frame memories; and
auxiliary memories each having a first-in first-out characteristic, the auxiliary memories being provided (i) on a side of the frame memories from which side the input image signals are to be written to the frame memories and (ii) on a side of the frame memories from which side the input image signals are to be read out from the frame memories,
each of the auxiliary memories having a capacity of storing an input image signal corresponding to one third or more of a frame period,
each of the frame memories having two frame memory regions, each of the frame memory regions being allocated an index for identification of said each of the frame memory regions, and
the writing section and the reading section carrying out writing and reading such that no overlap occurs between writing and reading to/from an identical one of the frame memory regions.

9. regions. A control program for causing a computer to function as a signal synthesis section recited in claim 1.

10. synthesis section recited in claim 1. A computer-readable recording medium in which a control program recited in claim 9 is stored.

11. program recited in claim 9 is stored. An image synthesizing method for synthesizing a plurality of input image signals to output a single image,
said method comprising the steps of, in a case where one of the input image signals is referred to as a reference input image signal:
specifying frames of the reference input image signal and of the other(s) of the input image signals which is/are to be synthesized with the reference input image signal, overlap between frame periods of the frames being long; and
synthesizing the frames thus specified in the step of specifying.

12. ng. The image synthesizing method according to claim 11, wherein:
in a case where, in each of the input image signals, a period during which a signal based on an image is being inputted is referred to as an effective signal period,
the frames, overlap between frame periods of the frames being long, are specified by specifying effective signal periods of the reference input image signal and of the other(s) of the input image signals, overlap between the effective signal periods being long.
